# EUROPEAN PATENT SPECIFICATION

(11) **EP 1 959 629 B1**
(45) Date of publication and mention of the grant of the patent: **13.04.2016**
(21) Application number: 07003023.4
(22) Date of filing: 13.02.2007
(51) Int. Cl.: H04W 12/06, H04L 29/06

(54) **METHOD FOR AUTHENTICATING A USER FOR ACCESS TO SERVER BASED APPLICATIONS FROM MOBILE DEVICE, GATEWAY AND IDENTITY MANAGEMENT UNIT**
VERFAHREN ZUR BENUTZERAUTHENTIFIZIERUNG FÜR DEN ZUGANG ZU SERVERBASIERTEN ANWENDUNGEN VON EINER MOBILEN VORRICHTUNG, GATEWAY UND IDENTITÄTSVERWALTUNGSEINHEIT
PROCÉDÉ D'AUTHENTIFICATION D'UN UTILISATEUR POUR ACCÉDER AUX APPLICATIONS DE SERVEUR À PARTIR D'UN DISPOSITIF MOBILE, PASSERELLE ET UNITÉ DE GESTION D'IDENTITÉ

(43) Date of publication of application: 20.08.2008
(73) Proprietor: Vodafone GmbH, 40549 Düsseldorf (DE)
(72) Inventor: Martin, Maurice, 3620 Ianaken (BE)
(74) Representative: Müller, Thomas

(56) References cited:
- EP-A- 1 624 639
- WO-A-2005/015875
- WO-A-2006/045402
- US-A1- 2002 065 879

## Description

The present invention relates to a method for authenticating a user for access to server based applications from a mobile device, a gateway for managing this authentication as well as to an identity management unit.

Typical wireless network architectures are composed of a server, a network and a mobile device, such as a computer, a phone, or a Personal Data Assistant (PDA), etc. On the mobile device a thin client may be installed. A thin client is referred to as a program on a client device which displays a user interface for a server-based application. Thin-clients run minimal or no user application code, i.e. most (if not all) of the application code runs on the server. Examples of thin-clients are Web Browsers, Citrix, X-Windows and PCAnywhere.

When using such thin client technology based solutions, for example for browsing the internet via the mobile device, users are mainly authenticated by using a username / password mechanism. The authentication is performed at the gateway, i.e. on the network side, using information input from the user at the mobile device. In US 2002/0099940 A1 secure internet applications with a mobile code are described. The system and method for securing pathways to a remote application server involves a gateway or authentication server, and a mobile code authentication and encryption client available for download from the gateway or authentication server. Upon connection of a user's computing device to the authentication server over the open network, the authentication server requests authentication information, such as a password, from the user, and upon authentication of the user by the authentication server, the authentication server downloads the mobile code authentication and encryption client to the user's computing device. The authentication and encryption client then authenticates itself to the authentication server, after which a secure communications channel between the user's computing device and the authentication server is opened, the secure communications channel permitting transfer of data between the user's computing device and an application server. The system and method do not require pre-installation or any certificates or other authentication and encryption software on the user's computing device, enabling the system and method to be used with thin-client and mobile computing devices, as well as with conventional computers.

The drawback of the prior art solutions is that the user is still required to enter a user name and/or password to obtain access to the gateway and thus to be able to use an application which is installed and executed on the server. In addition an authentication client has to be downloaded and installed to the mobile device before the authentication can take place.

In WO 2006/045402 A1 a method and system for transparently authentication a mobile user to access web services is described. According to this method an access-request message is sent from a mobile station to an application server via a gateway (GGSN). At the gateway an authentication token is obtained by using the subscriber address from an allocation server. The authentication token is associated to the access-request message and the thus amended message is transmitted to a packet data network. The access-request message has to have a syntax, which complies with an application layer protocol. For browsing the Internet on the mobile station, thus for example a microbrowser has to be installed.

One drawback of this method and system is that the processing power at the mobile station, where the microbrowser is installed is still considerable.

The problem underlying the present invention is thus to facilitate access of a user to an application running on a remote server, in particular to providing the possibility of browsing the internet via a thin client application from a mobile device, in particular a mobile phone.

According to a first aspect, the problem underlying the present invention is solved by a method for authenticating the user for access to applications executed on a remote gateway of a network from a mobile device via a thin client application. According to the inventive method the remote gateway is a remote display gateway for displaying a user interface of a server based application to the user of the mobile device, wherein the server based application is a browser application for browsing websites on the Internet and is accessed via the thin client application on the mobile device and wherein the remote gateway receives a request from the mobile device for initiating the server based application via the thin client application, extracts information on the mobile device requesting the initiation of the server based application, issues an authentication request to an identity management unit (5) within the network and the remote gateway performs a login of the user into the server based application installed on the remote gateway with an identifier, which has been obtained by the identity management unit, as a user name.

The network according to the present invention is preferably a network of computer networks and will hereinafter also be referred to as the Internet. The gateway is a network entity, such as a server and generally represents the entry point or node of the Internet interfacing with a mobile communications network, such as GSM or UMTS based networks. The mobile device may be a mobile phone or any other communication terminal. The mobile device is set up for mobile communication within the communications network and can thus establish a communication with the remote gateway. On the remote gateway or on a server connected to the remote gateway according to the present invention at least one application is installed and/or executed.

The application installed and executed on the remote gateway preferably provides personal settings for individual users. Alternatively or additionally the application will only be executable by a user after an authentication process that may include a login to the application has been carried out. The application is a browser application for browsing websites of the Internet.

These applications are server based and may be accessed via the mobile device. Such access is realized via a thin client application. The thin client application which will hereinafter also be referred to as the thin client, is a program installed on the mobile device for remote access to a server-based application installed and/or executed on the remote gateway for display of the user interface of the server-based application on the mobile device. The requests which can be issued by the mobile device, hence, include selections of options displayed on the mobile device via the remote gateway. The mobile device, via the thin client application installed thereon, serves as a mere input and output device for a server-based application executed on the remote gateway. The request for initiating the application on the remote gateway is transmitted via the thin client application. As the application on the remote gateway is a browser application, the request may be the launching of the browser. The initiation of the application, for example the launching of the browser, may require an authentication of the user.

The authentication may be necessary to verify that the user is entitled to access the application or to log the user in to the application to provide access to personal settings within the application.

With applications which are installed on the mobile device itself the user can be authenticated when turning on the mobile device, e.g. by entering his pin number. This means, that the user will not have to enter another password or user name in order to launch applications installed on the mobile device. Also personal settings for the application will be stored on the mobile device and will be readily accessible to the user of the mobile device after successfully turning on the mobile device.

With applications installed on the remote gateway, in contrast, such authentication on the mobile communication network level is not possible. For this purpose, according to the present invention, information on the mobile device, i.e. relating to the mobile device, from which the request for initiation of the application originates, is extracted from the request at the remote gateway. The extraction may be performed by reading fields, locations or labels within the request. These fields, locations or labels, where information on the mobile device, i.e. relating to the mobile device, is included in the request, may be predefined by the connection protocol used for communication with the remote gateway via the thin client application. At least part of the thus extracted information will be provided to an identity management unit within the network. The providing of this information to the identity management unit will be a request for authentication.

By involving a network entity such as the identity management unit, the information extracted from the initial request may be used to authenticate the user at the remote gateway. One advantage of the inventive method is thus that an authentication at the remote gateway and even a login process based on the authentication can be performed without specific input from the user. Once authenticated, the user will be able to view the user interface of the application executed on the remote gateway. Where applicable, even his personalized settings will be available for display and access. In case of a browser application such settings may for example be favourites or links.

The information on the mobile device, i.e. relating to the mobile device, which is extracted from the request at the remote gateway, may for example be the IP address of the mobile device and/or the MSISDN number of the user. This information is generally included in transmissions via the thin client application within the thin client application and/or within the protocol used for this transmission. The information can thus be extracted from requests transmitted within the thin client application. The IP address of the mobile device and/or the MSISDN number of the user can serve for authentication of the user, as the pairing of these values is unique. The verification of the validity of a pairing of an IP address and an MSISDN number or the respective pairing of an IP address to an MSISDN number, and vice versa, of a user cannot be performed at the remote gateway. The pairing information for such verification or pairing is only available to the operators of the mobile communication networks. According to the present invention, the transmission of this information in an authentication request to an identity management unit is therefore performed.

The login of the user at the remote gateway is performed with an identifier as a user name, wherein the identifier has been obtained by the identity management unit. The identifier may be an MSISDN number. This MSISDN number will either be the MSISDN number for which positive feed back on pairing with an IP address also transmitted to the identity management unit has been received. Alternatively, the MSISDN number is an MSISDN number which has been reported back to the remote gateway in response to an authentication request which only included an IP address of the mobile device.

According to a preferred embodiment the identity management unit accesses a database of a mobile network to determine an identifier of a user associated to the mobile device information extracted from the initiating request. The database of this mobile network is preferably the authentication, authorisation and accounting database (AAA). The AAA database of a mobile network comprises information on the IP address of mobile devices within the network as well as on the MSISDN number assigned to the mobile device. By using the AAA database for the inventive authentication of the user at the remote gateway, the establishment of a separate database is not necessary and an MSISDN number associated to a given IP address will be available. The identity management unit transmits the identifier retrieved from the database back to the gateway.

According to one embodiment of the present invention, a default password is used to authenticate the user at the remote gateway, in particular to the application executed on the remote gateway. The usage of a default password is possible with the inventive method, as the identifier received from the identity management unit already clearly indicates the authenticity of the user. Hence, an additional password is not necessary. The default password may be preset at the gateway or within the application to be initialized. The default password will be used, once the remote gateway or the application executed on the remote gateway detects that the identifier is not a user name entered by the user of the mobile device but information received from the identity management unit.

According to a further aspect, the present invention relates to a remote gateway for managing the authentication of a user for access to applications installed and/or executed on the remote gateway of a network from a mobile device via a thin client application. The remote gateway is a remote display gateway for displaying a user interface of a server based application to the user of the mobile device, wherein the server based application is a browser application for browsing websites on the Internet and is accessed via the thin client application on the mobile device, wherein the remote gateway is connected to an identity management unit (5) for obtaining authentication information on a user accessing the remote gateway (3) via the thin client application and wherein the remote display gateway uses the obtained authentication information for logging the user into an application installed on the remote display gateway. The remote gateway is a remote display gateway for displaying a user interface of a server based application to the user of the mobile device. The remote gateway is connected to an identity management unit for obtaining authentication information on a user accessing the remote gateway via the thin client application. By providing a connection to an identity management unit it will be possible to obtain necessary authentication information at the remote gateway without involvement of the user.

According to a preferred embodiment, the remote gateway comprises an extraction unit for extracting information on the mobile device, i.e. relating to the mobile device and/or its user from a request received from the mobile device. The extraction unit may be software, in particular a software program installed on the remote gateway or on a server connected to the remote gateway. The extraction unit may, in particular, read information or values from predetermined fields, locations or labels of requests within a thin client application. Alternatively or additionally, the extraction unit will extract information from the communication connection between the mobile device and the remote gateway which is established to execute the thin client application. According to a further embodiment of the present invention, the remote gateway comprises an interface for communicating with the identity management unit for forwarding extracted information and for receiving authentication information. The communication via this interface may for example be a web service, in particular a XML-based web service. This web service could offer the authentication interface of the identity management unit.

According to another aspect the present invention relates to an identity management unit of a network comprising a remote gateway with at least one application executable thereon. The identity management unit is connected to the remote gateway and has an interface to a database of the mobile network. The identity management unit is furthermore interposed between the remote gateway and the database to provide authentication information for authenticating a user for access to applications, which are executable on the remote gateway from the mobile device via a thin client application.

The identity management unit may be implemented as a software component. It may for example be a JAVA program or C++ program. The communication between the identity management unit and the database, preferably the AAA database of a mobile network operator, may be based on the RADIUS protocol. By using the RADIUS protocol, the necessary information on pairing of IP addresses and MSISDN numbers can be communicated to the identity management unit.

Features and advantages described with respect to the inventive method also apply to the remote gateway and the identity management unit, respectively, and vice versa.

The invention will now be described again in detail with reference to the enclosed figures, wherein:
Figure 1 shows a system in which the inventive method can be used and
Figure 2 shows a flow chart of one embodiment of the inventive method.

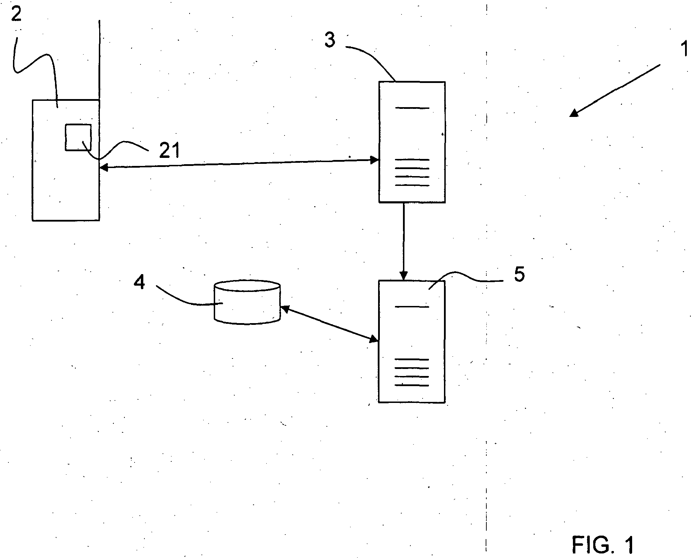

The system 1 shown in Figure 1 comprises a mobile device, depicted as a mobile phone 2. On the mobile phone 2 a remote display client 21 is provided. This client 21 may be software installed on the mobile phone 2. In particular, the client 21 is a thin client software installed on the mobile phone 2 to execute a thin client application. The system 1 further comprises a remote display gateway 3. In the depicted embodiment, the remote display gateway 3 is connected to an identity management unit 5. The identity management unit 5 has access to a database 4.

The remote display client 21 on the mobile phone 2 is a thin client application, i.e. allows remote access and display of the user interface of a server-based application, such as a browser, installed and/or executed on the remote display gateway 3. The user may use the thin client application to browse sites on the Internet. When a user starts his thin client based browsing process from the mobile phone 2, a respective request will be sent from the mobile phone 2, in particular the remote display client 21 to the remote display gateway 3. The remote display gateway 3 will subsequently determine the actual IP address used by the mobile device 2. This determination of the IP address may be performed by extracting the IP address from signals received from the remote display client 21. The remote display gateway 3 then sends an authentication request to the identity management unit 5. As input for the authentication request the remote display gateway 3 uses the extracted IP address of the mobile phone 2. Upon receipt of the authentication request, the identity manager 5 accesses the database 4, which preferably is the AAA database of a mobile communication network operator. The communication towards the database can be performed under the RADIUS protocol. From the database 4 the identity management unit 5 obtains the information of the MSISDN number assigned to the IP address which was included in the authentication request. Within the database 4 there is a unique mapping between an IP address and an MSISDN number in the mobile communication network.

Once the MSISDN number, mapped to the IP address received from the remote gateway 3 is available at the identity management unit 5, the identity management unit 5 will report the MSISDN assigned to the IP address back to the remote display gateway 3.

At the remote display gateway 3 a login process for logging-in the user of the mobile phone 2 to an application installed and/or executed on the remote display gateway 3 can now be performed. The remote display gateway 3 logs the user in by using the MSISDN number as the user name. The password for the login process may be a default password stored at the remote gateway 3.

Once the user is logged in, personalized settings and previously stored personalized data may be displayed to the user via the thin client application via the remote display client 21 of the mobile phone 2.

Where the application installed on the remote display gateway 3 is a browser application, the user will now be able to browse websites from the mobile device 2 via the thin client application installed thereon. Personalized settings such as favourites or links will be available to the user.

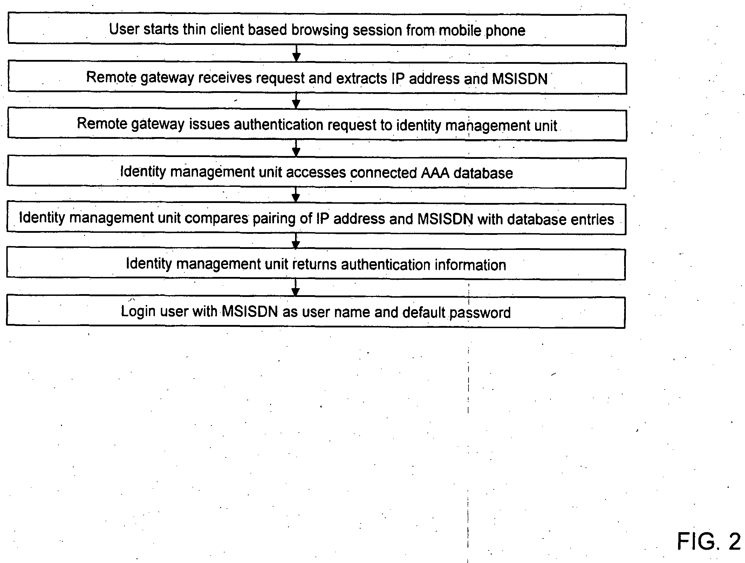

In Figure 2 a flow chart of an alternative embodiment of the inventive method is shown.

Also in this embodiment the user starts a thin client based browser session from the mobile device 2. The remote display gateway 3 receives the request and determines the actual IP address used by the mobile device 2 and in addition extracts the MSISDN of the mobile device 2 from the launching request received from the mobile device 2. The remote display gateway 3 issues an authentication request to the identity management unit 5. In this embodiment the authentication request includes both the IP address as well as the MSISDN number of the mobile device 2.

The identity management unit 5 accesses the connected AAA database 4 and compares the pairing of the IP address and the MSISDN number with the respective entry of the database 4. If the pairing is correct, i.e. if a pair received from the remote display gateway 3 matches the pair stored in the database 4.

The identity management unit 5 will then return authentication information back to the remote display gateway 3. In this embodiment the authentication information may be the IP address and the MSISDN number or a statement of authentication. At the remote display gateway 3 the MSISDN number may be used as the user name for a login process to an application installed on the remote display gateway 3. The password for the login service may be a default password stored on the remote display gateway 3.

By providing an authentication extension to a remote display architecture for thin client applications, the user may be provided with an improved experience of using applications on a remote display gateway 3. In particular by using an identity management unit which takes care of identification of the user based on network credentials personalized information and settings can be provided to the user of the mobile device without necessitating entering of a user name and/or password at the mobile device to use a thin client technology when executing an application on the remote display gateway.

## Claims

1. Method for authenticating a user for access to applications executed on a remote gateway (3) of a network from a mobile device (2) via a thin client application, wherein the remote gateway (3) is a remote display gateway for displaying a user interface of a server based application to the user of the mobile device, wherein the server based application is a browser application for browsing websites on the Internet and is accessed via the thin client application on the mobile device and wherein the remote gateway (3) receives a request from the mobile device (2) for initiating the server based application via the thin client application, extracts information on the mobile device (2) requesting the initiation of the server based application, issues an authentication request to an identity management unit (5) within the network and the remote gateway (3) performs a login of the user into the server based application installed on the remote gateway with an identifier, which has been obtained by the identity management unit (5), as a user name.

2. Method according to claim 1, **characterized in that** the identifier is an MSISDN number, obtained from the identity management unit (5).

3. Method according to claim 1 or 2, **characterized in that** the identity management unit (5) accesses a database (4) of a mobile network to determine an identifier of the user associated to the mobile device information extracted from the initiating request.

4. Method according to claim 3, **characterized in that** the database (4) is an authentication data base of the mobile network.

5. Method according to claim 3 or 4, **characterized in that** the identity management unit (5) transmits the retrieved identifier to the remote gateway (3).

6. Method according to any one of claims 1 to 5, **characterized in that** a default password is used to authenticate the user.

7. Remote gateway for managing the authentication of a user for access to applications executed on the remote gateway (3) of a network from a mobile device (2) via a thin client application, wherein the remote gateway (3) is a remote display gateway for displaying a user interface of a server based application to the user of the mobile device, wherein the server based application is a browser application for browsing websites on the Internet and is accessed via the thin client application on the mobile device, wherein the remote gateway (3) is connected to an identity management unit (5) for obtaining authentication information on a user accessing the remote gateway (3) via the thin client application and wherein the remote display gateway uses the obtained authentication information for logging the user into an application installed on the remote display gateway.

8. Remote gateway according to claim 7, **characterized in that** the remote gateway (3) comprises an extraction unit for extracting information on the mobile device (2) from a request received from the mobile device (2).

9. Remote gateway according to claim 7 or 8, **characterized in that** the remote gateway (3) comprises an interface for communicating with the identity management unit (5) for forwarding extracted information and for receiving authentication information.

10. Identity management unit of a network comprising a remote gateway with at least one application executable thereon, wherein the identity management unit (5) is connected to the remote gateway (3) and has an interface to a database (4) of a mobile network and wherein the identity management unit (5) is interposed between the remote gateway (3) and the database (4) to provide authentication information for authenticating a user for access to applications executable on the remote gateway (3) from the mobile device (2) via a thin client application.

## Patentansprüche

1. Verfahren zum Authentifizieren eines Nutzers für den Zugang zu Anwendungen, die auf einem Ferngateway (3) eines Netzwerkes von einem Mobilgerät (2) via einer Thin Client Anwendung ausgeführt werden, wobei das Ferngateway (3) ein Fern-Anzeigegateway zur Anzeige einer Benutzeroberfläche einer serverbasierten Anwendung für den Nutzer des Mobilgerätes ist, wobei die serverbasierte Anwendung eine Browseranwendung zum Browsen von Webseiten im Internet ist und auf die via der Thin Client Anwendung auf dem Mobilgerät zugegriffen wird und wobei das Ferngateway (3) eine Anfrage von dem Mobilgerät (2) zum Initiieren der serverbasierten Anwendung via der Thin Client Anwendung erhält, Informationen zu dem Mobilegerät (2), das das Initiieren der serverbasierten Anwendung anfragt, extrahiert, eine Authentifizierungsanfrage an eine Identitätsverwaltungseinheit (5) in dem Netzwerk sendet und das Ferngateway (3) einen Login des Nutzers in die serverbasierte Anwendung, die auf dem Ferngateway (3) installiert ist, mit einem Identifier als Benutzername durchführt, der von der Identitätsverwaltungseinheit (5) erhalten wurde.

2. Verfahren gemäß Anspruch 1, **dadurch gekennzeichnet, dass** der Identifier eine MSISDN Nummer ist, die von der Identitätsverwaltungseinheit (5) erhalten wurde.

3. Verfahren gemäß Anspruch 1 oder 2, **dadurch gekennzeichnet, dass** die Identitätsverwaltungseinheit (5) auf eine Datenbank (4) eines Mobilnetzes zugreift, um einen Identifier des Nutzers, der mit der Mobilgerätinformation verbundenen ist, die von der Initiierungsanfrage extrahiert wurde, assoziiert ist.

4. Verfahren nach Anspruch 3, **dadurch gekennzeichnet, dass** die Datenbank (4) eine Authentifizierungsdatenbank des Mobilnetzwerkes ist.

5. Verfahren nach einem der Ansprüche 3 oder 4, **dadurch gekennzeichnet, dass** die Identitätsverwaltungseinheit (5) den erhaltenen Identifier an das Ferngateway (3) übermittelt.

6. Verfahren nach einem der Ansprüche 1 bis 5, **dadurch gekennzeichnet, dass** ein default Passwort verwendet wird, um den Nutzer zu authentifizieren.

7. Ferngateway zur Handhabung der Authentifizierung eines Nutzers für den Zugang zu Anwendungen, die auf einem Ferngateway (3) eines Netzwerks von einem Mobilgerät (2) via einer Thin Client Anwendung ausgeführt werden, wobei das Ferngateway (3) ein Fern-Anzeigegateway zur Anzeige einer Benutzeroberfläche einer serverbasierten Anwendung für den Nutzer des Mobilgerätes ist, wobei die serverbasierte Anwendung eine Browseranwendung zum Browsen von Webseiten im Internet ist und auf die via der Thin Client Anwendung auf dem Mobilgerät zugegriffen wird, wobei das Ferngateway (3) mit einer Identitätsverwaltungseinheit (5) verbunden ist zum Erhalt von Authentifizierungsinformationen für einen Nutzer, der auf das Ferngateway (3) via der Thin Client Anwendung zugreift, und wobei das Fern-Anzeigegateway die erhaltenen Authentifizierungsinformationen zum Einloggen des Nutzers in eine Anwendung, die auf dem Ferngateway installiert ist, verwendet.

8. Ferngateway gemäß Anspruch 7, **dadurch gekennzeichnet, dass** das Ferngateway (3) eine Extraktionseinheit zum Extrahieren von Informationen zu dem Mobilgerät (2) aus einer Anfrage, die von dem Mobilgerät (2) empfangen wird, umfasst.

9. Ferngateway gemäß einem der Ansprüche 7 oder 8, **dadurch gekennzeichnet, dass** das Ferngateway (3) eine Schnittstelle zur Kommunikation mit der Identitätsverwaltungseinheit (5) zum Weiterleiten von extrahierten Informationen und zum Empfang von Authentifizierungsinformationen umfasst.

10. Identitätsverwaltungseinheit eines Netzwerk, das ein Ferngateway umfasst mit mindestens einer Anwendung, die darauf ausführbar ist, wobei die Identitätsverwaltungseinheit (5) mit dem Ferngateway (3) verbunden ist und eine Schnittstelle zu einer Datenbank (4) eines Mobilnetzwerkes aufweist und wobei die Identitätsverwaltungseinheit (5) zwischen dem Ferngateway (3) und der Datenbank (4) zwischengeschaltet ist, um Authentifizierungsinformationen zum Authentifizieren eines Nutzers für den Zugang zu Anwendungen, die auf dem Ferngateway (3) von dem Mobilgerät (2) über eine Thin Client Anwendung ausführbar sind, zur Verfügung zu stellen.

## Revendications

1. Procédé d'authentification d'un utilisateur afin d'assurer l'accès à des applications exécutées sur une passerelle distante (3) d'un réseau à partir d'un dispositif mobile (2) par l'intermédiaire d'une application client léger, dans lequel la passerelle distante (3) est une passerelle d'affichage distante destinée à afficher une interface d'utilisateur d'une application basée sur serveur à l'utilisateur du dispositif mobile, dans lequel l'application basée sur serveur est une application de consultation destinée à consulter des sites sur Internet et son accès est assuré par l'intermédiaire de l'application client léger sur le dispositif mobile et dans lequel la passerelle distante (3) reçoit une demande, à partir du dispositif mobile (2), d'initiation de l'application basée sur serveur par l'intermédiaire de l'application client léger, extrait des informations sur le dispositif mobile (2) demandant l'initiation de l'application basée sur serveur, délivre une demande d'authentification à une unité de gestion d'identité (5) à l'intérieur du réseau et la passerelle distante (3) met en oeuvre une identification de l'utilisateur dans l'application basée sur serveur installée sur la passerelle distante avec un identificateur, qui a été obtenu par l'unité de gestion d'identité (5), en tant que nom d'utilisateur.

2. Procédé selon la revendication 1, **caractérisé en ce que** l'identificateur est un nombre MSISDN, obtenu à partir de l'unité de gestion d'identité (5).

3. Procédé selon la revendication 1 ou 2, **caractérisé en ce que** l'unité de gestion d'identité (5) accède à une base de données (4) d'un réseau mobile afin de déterminer un identificateur de l'utilisateur associé à l'information de dispositif mobile extraite de la demande d'initiation.

4. Procédé selon la revendication 3, **caractérisé en ce que** la base de données (4) est une base de données d'authentification du réseau mobile.

5. Procédé selon la revendication 3 ou 4, **caractérisé en ce que** l'unité de gestion d'identité (5) transmet l'identificateur extrait à la passerelle distante (3).

6. Procédé selon l'une quelconque des revendications 1 à 5, **caractérisé en ce qu'**un mot de passe par défaut est utilisé afin d'authentifier l'utilisateur.

7. Passerelle distante destinée à gérer l'authentification d'un utilisateur afin d'assurer l'accès à des applications exécutées sur la passerelle distante (3) d'un réseau à partir d'un dispositif mobile (2) par l'intermédiaire d'une application client léger, dans laquelle la passerelle distante (3) est une passerelle d'affichage distante destinée à afficher une interface d'utilisateur d'une application basée sur serveur à l'utilisateur du dispositif mobile, dans laquelle l'application basée sur serveur est une application de consultation destinée à consulter des sites Internet et est accessible via l'application client léger sur le dispositif mobile, dans laquelle la passerelle distante (3) est couplée à une unité de gestion d'identité (5) pour obtenir des informations d'authentification d'un utilisateur accédant à la passerelle distante (3) par l'intermédiaire de l'application client léger et dans laquelle la passerelle d'affichage distante utilise les informations d'authentification obtenues afin d'identifier l'utilisateur dans une application installée sur la passerelle d'affichage distante.

8. Passerelle distante selon la revendication 7, **caractérisée en ce que** la passerelle distante (3) comprend une unité d'extraction destinée à extraire des informations sur le dispositif mobile (2) à partir d'une demande reçue du dispositif mobile (2).

9. Passerelle distante selon la revendication 7 ou 8, **caractérisée en ce que** la passerelle distante (3) comprend une interface destinée à communiquer avec l'unité de gestion d'identité (5) afin de transmettre des informations extraites et de recevoir des informations d'authentification.

10. Unité de gestion d'identité d'un réseau comprenant une passerelle distante avec au moins une application pouvant être exécutée sur celle-ci, dans laquelle l'unité de gestion d'identité (5) est couplée à la passerelle distante (3) et présente une interface avec une base de données (4) d'un réseau mobile et dans laquelle l'unité de gestion d'identité (5) est interposée entre la passerelle distante (3) et la base de données (4) afin de délivrer des informations d'authentification destinées à authentifier un utilisateur de manière à assurer l'accès à des applications pouvant être exécutées sur la passerelle distante (3) à partir du dispositif mobile (2) par l'intermédiaire d'une application client léger.
